Europäisches Patentamt

(19) European Patent Office

Office européen des brevets

(11) Numéro de publication: **0 064 927**
**B1**

(12) **FASCICULE DE BREVET EUROPEEN**

(45) Date de publication du fascicule du brevet: 02.09.87

(51) Int. Cl.⁴: **F 16 M 11/18**

(21) Numéro de dépôt: **82400837.9**

(22) Date de dépôt: **06.05.82**

(54) **Appareil formant socle pour un poste récepteur muni d'un écran de visualisation.**

(30) Priorité: **11.05.81 FR 8109309**

(43) Date de publication de la demande:
**17.11.82 Bulletin 82/46**

(45) Mention de la délivrance du brevet:
**02.09.87 Bulletin 87/36**

(84) Etats contractants désignés:
**AT BE CH DE FR GB IT LI NL SE**

(56) Documents cités:
**DE-A-2 847 135**
**FR-A- 717 319**
**FR-A-1 362 637**
**US-A-2 950 893**
**US-A-3 637 233**

(73) Titulaire: **Tabourin, Philippe**
**44 Rue des Ponts Neufs**
**F-72000 Le Mans (FR)**

(72) Inventeur: **Tabourin, Philippe**
**44 Rue des Ponts Neufs**
**F-72000 Le Mans (FR)**

(74) Mandataire: **Moncheny, Michel et al**
**c/o Cabinet Lavoix 2 Place d'Estienne d'Orves**
**F-75441 Paris Cedex 09 (FR)**

Courier Press, Leamington Spa, England.

## Description

L'invention a pour objet un appareil formant socle pour un poste récepteur muni d'un écran de visualisation par exemple un terminal d'ordinateur.

Un dispositif de ce genre est décrit dans la demande DE—A—2 847 135 relative à un dispositif support pour une unité d'affichage d'informations.

On connait par ailleurs d'après US—A—3 637 233 un méchanisme de déplacement pour un microscope chirurgical dont le pied est pourvu de moyens de roulement escamotables à l'intérieur du pied à l'aide d'un bouton de manoeuvre afin d'assurer l'immobilisation de l'appareil ou bien de permettre son déplacement par roulement sur le sol.

Le but de l'invention est de proposer un appareil de ce genre que permette une utilisation rationnelle du poste récepteur et une bonne lecture des images sur l'écran.

L'appareil suivant l'invention est caractérisé par:

un boîtier que repose normalement sur une surface d'appui et supporte ainsi l'appareil,

un couvercle plat destiné à supporter le poste récepteur articulé sur le boîtier autour d'un axe horizontal se trouvant dans un plan médian du boîtier, cet axe solidarisant le boîtier avec le couvercle,

un châssis disposé à l'intérieur du boîtier arc muni de moyens de roulement ou de glissement pour permettre son déplacement, ce chassis reposant par ces moyens sur ladite surface d'appui,

un levier destiné à soulever solidairement le couvercle plat et le boîtier par rapport au châssis qui reste maintenu en contact avec la surface d'appui, tandis que le boîtier est soulevé de la surface d'appui, le levier étant monté pivotant sur le couvercle autour d'un axe situé entre ses deux extrémités et parallèle à l'axe horizontal d'articulation du couvercle et du boîtier; le levier prenant appui par une extrémité sur le dessus du châssis; l'autre extrémité servant de moyen pour actionner le soulèvement du couvercle et du boîtier par rapport au châssis de sorte que l'appareil p̃eut être déplacé à l'aide desdits moyens de roulement ou de glissement.

Lorsque le levier est actionné, il est ainsi possible de déplacer sur la surface d'appui l'appareil portant le poste récepteur, grâce aux roulettes ou patins de glissement dant est dôte le châssis. Ce déplacement peut être exécuté dans une direction quelconque et peut même consister en un mouvement tournant sans translation, si on utilise par exemple des roulettes sphériques ou des patins de glissement circulaires de profil convexe. Ceci permet notamment à plusieurs personnes occupant des postes de travail différents, par exemple autour d'un terminal d'ordinateur à écran de visualisation de pouvoir chacune à tour de rôle observer l'écran en lui donnant, sans effort, la position et l'orientation exactement adaptées à son poste de travail. Lorsque le levier est ramené dans sa position inactive, des patins à caractéristiques anti-dérapantes normalement prévus à la base du boîtier reviennent au contact de la surface d'appui en immobilisant l'appareil.

Quant aux reflets qui risquent d'apparaître et de rendre difficile, fatigante et parfois impossible la lecture des informations visualisées, ils peuvent être élimines par un changement d'inclinaison par rapport au boîtier ̃du couvercle, propre à modifier de façon appropriée l'angle d'incidence des rayons lumineux tombant sur l'écran. Pour que le couvercle soit retenu dans la position angulaire voulue, l'invention prévoit un dispositif de verrouillage à verrou escamotable. Ce verrou est de préférence constitué par une pièce formant bascule, montée pivotante sur le couvercle et ayant avec le levier une liasion a doigt et fente, telle que dans la position inactive de ce dernier la bascule est en prise avec un élément fixé au boîtier et que l'actionnement du levier provoque un déverrouillage par pivotement de la bascule. Il est avantageux que la bascule comporte un bord cranté auquel correspond un profil cranté complémentaire de l'élément fixé au boîtier.

Les manoeuvres sont facilitées par une autre caractéristique suivant laquelle le couvercle comporte une partie avant débordante par rapport au boîtier, dans laquelle est formée une poignée permettant de saisir une extrémité du levier, pour l'actionner. Le couple à appliquer pour donner au couvercle la position angulaire la plus favorable est tout à fait minime si, comme il est préférable, l'axe d'articulation horizontal reliant le couvercle au boîtier est situé à peu près au milieu de la dimension longitudinale du châssis et transversalement par rapport à lui, ce qui permet de faire en sorte que le centre de gravité de l'ensemble formé par le couvercle et le poste récepteur qu'il supporte soit situé à peu près à l'aplomb de l'axe d'articulation horizontal.

L'invention sera explicitée au cours de la description qui va suivre, en référence aux dessins annexés, dans lesquels:

la fig. 1 est une vue en perspective schématique de l'appariel suivant l'invention;

la fig. 2 est une vue en coupe longitudinale de l'appareil;

la fig. 3 est une vue en coupe longitudinale partielle montrant le dispositif de verrouillage ̧ entre le couvercle et le boîtier;

la fig. 4 est une vue de détail représentant l'articulation du couvercle sur le boîtier;

la fig. 5 est une vue partielle en plan de l'appareil.

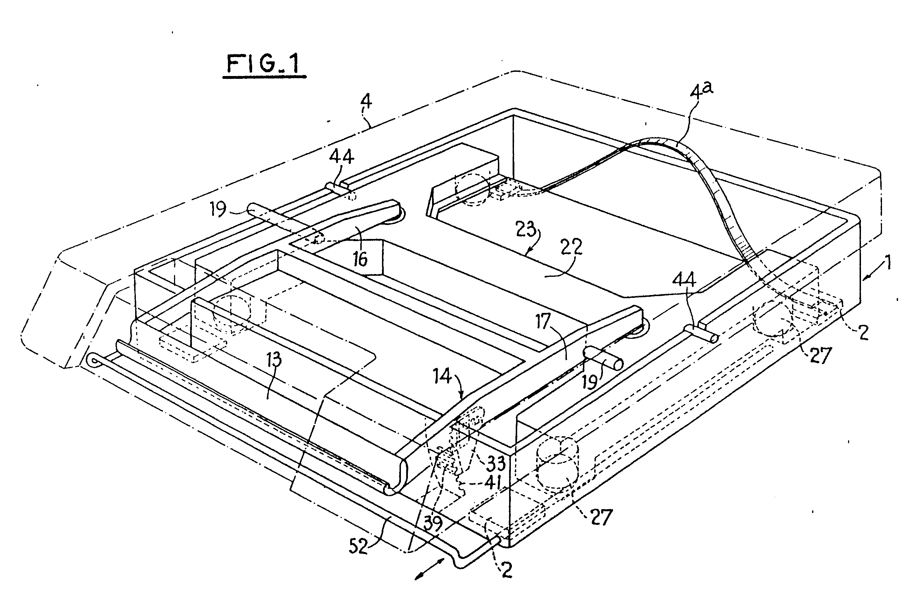

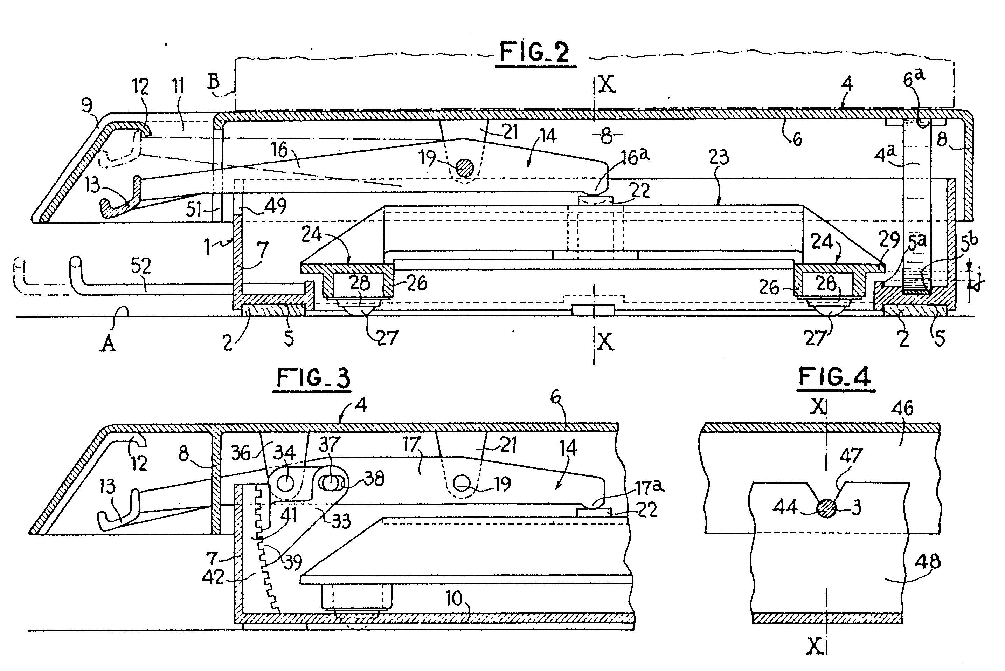

L'appareil représenté aux figures 1 et 2 comporte un boîtier 1, de forme générale rectangulaire, qui repose sur une surface d'appui A par l'intermédiaire de quatre patins 2 retenus dans des logements 5, situés ·aux quatre coins du boîtier 1 et présentant une surface anti-dérapante que crée un frottement au contact de la surface A. Sur ce boîter est articulé, autour d'un axe transversal 3 disposé dans le plan transversal médian XX du boîtier 1, un couvercle 4, sur la face supérieure 6 formant plateau duquel peut être posé un poste récepteur B (fig. 2), comportant un écran de visualisation tourné vers la face avant 7 du boîtier 1.

A l'extrémité arrière de l'appareil entre le boîtier 1 et le dessous du plateau 6 du couvercle 4 est interposé un amortisseur constitué par un ressort à lame 4a de forme incurvée, en forme de chapeau de gendarme, dont les extrémités sont engagées à coulissement dans des rainures 5b ménagées dans les parois du boîtier 1 opposées aux logements 5. Le sommet du ressort 4a est engagé dans une rainure de guidage 6a prévue dans le dessous plateau 6.

Le ressort ainsi disposé, fléchit sous l'effet du basculement du couvercle 4 vers l'arrière et ses extrémités s'écartent en se déplaçant dans les rainures 5b. Ainsi les mouvements angulaires trop brusques que risquent de se produire lorsque le couvercle 4 est chargé d'un appareil, sont amortis par le ressort 4a qui reprend sa forme lors d'un déplacement du couvercle en sens inverse.

Le couvercle 4, qui comme le boîtier 1 est de préférence en matière plastique, comporte outre des flancs périphériques 8 recouvrant partiellement les faces latérale du boîtier 1, une partie 9 qui a une disposition débordante par rapport à la face avant 7 du boîtier 1 et dans le dessus de laquelle est formée une découpe de forme générale rectangulaire 11 délimitée vers l'avant par une portion profilée 12 qui forme une poignée permettant de saisir la partie débordante du couvercle 4. A travers la découpe 11 peut également être saisie une traverse terminale de préhension 12 d'un levier 14 ayant la forme générale d'un étrier, dont les branches 16, 17, réunies par la traverse terminale 13 et par une traverse intermédiaire 18, sont articulées chacune au moyen d'un axe transversal 19 qui traverse, outre la branche 16 ou 17, deux bras pendants 21 formant chape, venus de moulage avec la face inférieure du plateau 6 du couvercle 4.

L'extrémité 16a, 17a de chacune des branches 16, 17 qui est opposée à la traverse terminale 13 et se trouve en arrière de l'axe de pivotement du levier, prend appui sur une traverse médiane 22 d'un châssis 23 de forme générale en double T, symétrique par rapport au plan XX qui passe par les extrémités d'appui 16a, 17a, dont chacune des ailes 24 comporte à ses extrémités respectives deux logements 26 dans chacun desquels est montée une roulette sphérique en matière plastique, 27, retenue par une portée 28. Les deux ailes 24 sont situées longitudinalement dans l'espace libre ménagé à l'intérieur du boîtier 1, entre les logements correspondants 5 qui reçoivent les patins de frottement 2.

Entre le bord interne 5a de chaque logement 5 et une partie terminale adjacente 29, en surplomb, de l'aile 24 du châssis 23 est ménagé un jeu j. Cette disposition, tout en assurant que le châssis 23 est supporté par le boîtier 1 lorsque l'ensemble de l'appareil est transporté, permet un déplacement vertical relatif, d'amplitude limitée, du boîtier et du châssis dans les conditions qui seront précisées dans la suite.

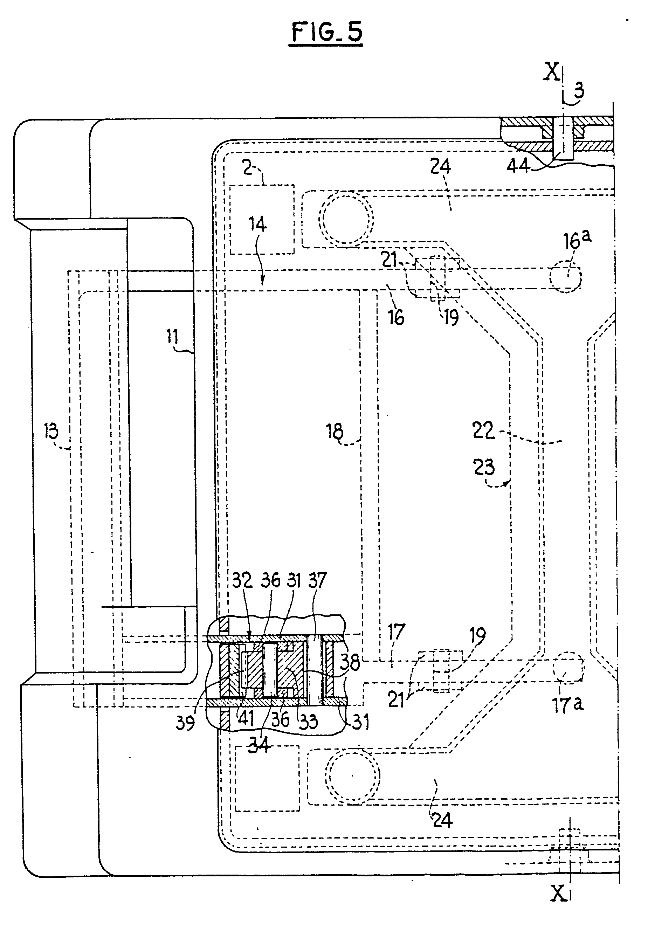

Ainsi qu'il ressort de la figure 5, la partie de la branche 17 de l'étrier 14 formant levier, qui est comprise entre la traverse intermédiaire 18 et la traverse terminale 13 s'élargit en formant une chape entre les branches 31 de laquelle est prévu un dispositif de verrouillage 32, à verrou escamotable, permettant de retenir le couvercle 4 dans la position angulaire par rapport au boîtier 1, qui est déterminée par pivotement du couvercle autour de l'axe 3 (Fig. 4 et 5). Le verrou de ce dispositif de verrouillage est constitué par une pièce 33 d'allure triangulaire, formant bascule, qui est articulée au moyen d'un axe 34 entre les deux bras 36 d'une suspente qui fait corps avec le dessous du plateau 6 et qui est guidée dans la branche 17 du levier 14 au moyen d'un axe 37 monté entre les deux branches 31 et traversant une ouverture oblongue 38, orientée longitudinalement, de la bascule. Cette dernière est normalement sollicitée par la gravité dans la position de verrouillage représentée à la Figure 3, pour laquelle un crantage 39 formé sur le bord légèrement convexe et d'orientation à peu près verticale de la bascule 33 est en prise avec un crantage conjugué 41 formé sur le bord légèrement concave d'un élément 42 fixé sur la face avant 7 et sur le fond 10 du boîtier 1.

Dans le mode de réalisation décrit et représenté on a prévu un seul dispositif de verrouillage monté dans une chape de la branche 17 de l'étrier 14.

Un dispositif de verrouillage identique peut être également prévu dans l'autre branche 16 de l'étrier et comporter comme le dispositif de verrouillage 32 un verrou cranté formant bascule identique au verrou 33 articulé entre les faces d'une suspente correspondante faisant corps avec le dessous du plateau 6 et guidé dans la branche 16 du levier 14 au moyen d'un axe correspondant à l'axe 37 du dispositif 33 traversant une ouverture oblongue du verrou, celui-ci coopérant avec un élément cranté fixé sur la face avant 7 et sur le fond 10 du boîtier au niveau de la branche 16.

L'appareil se trouvant dans l'état de la figure 3, où le levier 14 est en position basse inactive et où le couvercle 4 est bloqué en une position qui dans l'exemple représenté est horizontale, lorsque l'opérateur saisit à travers l'ouverture 11 la traverse de préhension terminale 13 du levier 14 en le soulevant jusqu'à l'appliquer au contact de la poignée 12, comme représenté en trait mixte à la Figure 2, le déverrouillage du dispositif 32 se produit tout d'abord sous l'effet du pivotement dans le sens contraire à celui des aiguilles d'une montre (fig. 3), autour de l'axe 34, de la bascule 33, dû à la poussée exercée vers le haut sur cette dernière par l'axe 37 solidaire du levier 14. Après le dégagement du crantage 39 par rapport au crantage 41, le pivotement vers le haut du levier 14, qui prend appui par l'extrémité 16a, 17a de ses branches 16, 17 sur la traverse médiane 22 du châssis 23 provoque un déplacement vers le haut du couvercle 4 et avec lui du boîtier 1, auquel il est relié par l'axe d'articulation 3, de sorte que seul le châssis 23 repose sur la surface d'appui A par ses roulettes 27, les quatre patins 22 qui initialement avaient un contact de frottement avec cette surface ayant été soulevés. Il est alors possible de déplacer horizontalement, avec un effort minime, par l'intermédiaire du châssis 23, l'ensemble de l'appareil, éventuellement en le faisant tourner sur lui-même. Est également possible un réglage de la position angulaire du couvercle 4 par rapport au boîtier 1, par pivotement autour de l'axe 3 qui, comme représenté aux figures 4 et 5, est matérialisé par deux tourillons en acier 44 ancrés dans les lancs opposés 46 du couvercle 4 et qui sont engagés par enclenchement dans le fond de deux découpes 47 en forme de trou de serrure pratiquées dans les faces 48 correspondantes du boîtier 1. Lorsque la traverse de préhension 13 est relâchée et que le levier revient par gravité dans sa position basse inactive, l'état initial de l'appareil est rétabli, le boîtier I s'est abaissé, de sorte que les patins 2 reposent à nouveau sur la surface d'appui A, la bascule 33 a pivoté dans le sens des aiguilles d'une montre en bloquant à nouveau le dispositif 32 de verrouillage, par mise en prise des deux crantages, ce que immobilise le couvercle dans la position angulaire qui lui a été donnée.

Pour assurer la liberté de mouvement des branches 16, 17 du levier 14, des découpes appropriées 49, 51 sont exécutées respectivement dans la face avant 7 du boîtier 1 et dans le flanc adjacent 8 du convercle 4.

On remarquera qu'aux figures 1 et 2 la référence 52 désigne un étrier coulissant prévu pour supporter, le cas échéant, un clavier couplé avec le poste récepteur ou avec tout autre appareil.

## Revendications

1. Appareil formant socle pour un poste récepteur (B) muni d'un écran de visualisation, par exemple un terminal d'ordinateur, caractérisé en ce que ledit appareil comporte:

un boîtier (1) qui repose normalement sur une surface d'appui (A) et supporte ainsi l'appareil,

un couvercle plat (4) destiné à supporter le poste récepteur, et articulé sur le boîtier (1) autour d'un axe horizontal (3, 44) se trouvant dans un plan médian (x—x) du boîtier, cet axe solidarisant le boîtier (1) avec le couvercle (4),

un châssis (23) disposé à l'intérieur du boîtier (1) et muni de moyens de roulement (27) ou de glissement pour permettre son déplacement, ce chassis reposant par ces moyens sur ladite surface d'appui (A),

un levier (14) destiné à soulever solidairement le couvercle plat (4) et le boîtier (1) par rapport au châssis (23) qui reste en contact avec la surface d'appui (A), tandis que le boîtier est soulevé de la surface d'appui; le levier (14) étant monté pivotant sur le couvercle (4) autour d'un axe (19) situé entre ses deux extrémités et parallèle à l'axe horizontal (3, 44) d'articulation du couvercle (4) et du boîtier (1); le levier (14) prenant appui par une extrémité (16a) sur le dessus (22) du châssis (23); l'autre extrémité (13) servant de moyen pour actionner le soulèvement du couvercle (4) et du boîtier (1) par rapport au châssis (23) de sorte que l'appareil peut être déplacé à l'aide desdits moyens de roulement (27) ou de glissement.

2. Appareil suivant la revendication 1, caractérisé en ce que le couvercle (4) est normalement retenu par rapport au boîtier (1) dans sa position angulaire relative par au moins un dispositif de verrouillage (32) à verrou escamotable (33).

3. Appareil suivant la revendication 2, caractérisé en ce que le verrou est constitué par une pièce formant bascule (33) montée pivotante sur le couvercle (4) et ayant avec le levier (14) une liaison telle que dans la position inactive de ce dernier la bascule (33) est en prise avec un élément (42) fixé au boîtier (1), et que làctionnement du levier (14) provoque un déverrouillage par pivotement de la bascule.

4. Appareil suivant la revendication 3, caractérisé en ce que la bascule (33) comporte un bord cranté (39) auquel correspond un profil cranté complémentaire (41) de l'élément (42) fixé au boîtier (1).

5. Appareil suivant l'une des revendications 2 à 4, caractérisé en ce que, entre la bascule (33) et le levier (14), est prévue une liaison à doigt (37) et fente (38).

6. Appareil suivant l'une des revendications 1 à 5, caractérisé en ce que le couvercle (4) comporte une partie avant (9) débordante par rapport au boîtier (1), dans laquelle est formée une poignée (12) permettant de saisir une extrémité (13) du levier (14), pour l'actionner.

7. Appareil suivant la revendication 1, caractérisé en ce que l'appui du levier (16a) sur le châssis (23) se trouve dans un plan transversal médian (XX) commun au boîtier (1) et au châssis (23).

8. Appareil suivant l'une des revendications 1 à 7, caractérisé en ce que le châssis (23) repose sur la surface d'appui (A) par l'intermédiaire de roulettes sphériques (27), de préférence en matière plastique.

9. Appareil suivant l'une des revendications 6 à 8, caractérisé en ce que le levier (14) forme un étrier dont la traverse terminale (13) est adjacente à la poignée (12) du couvercle (4).

10. Appareil suivant l'une des revendications 1 à 9, caractérisé en ce que le boîtier comporte des patins (2) à caractéristiques anti-dérapantes, en vue de son contact avec frottement avec la surface d'appui (A).

11. Appareil suivant l'une quelconque des revendications 1 à 10, caractérisé en ce qu'il comporte en outre un amortisseur (4a) des déplacements angulaires du couvercle (4) par rapport au boîtier.

12. Appareil suivant la revendication 11, caractérisé en ce que ledit amortisseur est constitué par un ressort à lame (4a) de forme incurvée dont les extrémités sont engagées à coulissement dans des rainures (5a) prévues dans l'extrémité arrière du boîtier (1) et dont le sommet est engagé dans une rainure de guidage (6a) ménagée dans le plateau (6) du couvercle (4).

**Patentansprüche**

1. Gestell für einen mit Bildschirm versehenen Empfänger (B), zum Beispiel ein Terminal eines Computers, gekennzeichnet durch

ein Gehäuse (1), das normalerweise auf einer Auflagefläche (A) ruht und somit das Gestell trägt, einen flachen Deckel (4), der dazu bestimmt ist, den Empfänger zu tragen, und der auf dem Gehäuse (1) um eine horizontale Achse (3, 44)) schwenkbar angelenkt ist, die sich in einer Mittelebene (x—x) des Gehäuses befindet, wobei diese Achse das Gehäuse (1) mit dem Deckel (4) verbindet,

ein im Inneren des Gehäuses (1) angeordnetes Châssis (23), das mit Organen zum Rollen (27) oder Gleiten versehen ist, um dessen Verschiebung durch diese Organe auf der besagten Auflagefläche (A) zu ermöglichen,

einen Hebel (14), der dazu bestimmt ist, den flachen Deckel (4) und das Gehäuse (1) zusammen gegenüber dem Châssis (23), das in Kontakt mit der Auflagefläche (A) bleibt, anzuheben, während das Gehäuse von der Auflagefläche angehoben ist, wobei der Hebel (14) schwenkbar auf dem Deckel (4) um eine Achse (19) angeordnet ist, die zwischen seinen beiden Enden parallel zur horizontalen Drehachse (3, 44) des Deckels (4) und des Gehäuses (1) angeordnet ist, wobei der Hebel (14) mit einem seiner Enden (16a) an der Decke (22) des Châssis (23) anliegt, während das andere Ende (13) als Mittel zum Anheben des Deckels (4) und des Gehäuses (1) im Verhältnis zum Châssis (23) dient, derart, daß das Gestell mit Hilfe der Roll- oder Gleitorgane (27) verschoben werden kann.

2. Gestell nach Anspruch 1, dadurch gekennzeichnet, daß der Deckel (4) normalerweise im Verhältnis zum Gehäuse (1) in seiner relativen Winkellage mittels mindestens einem Verriegelungsorgan (32) mit zurückziehbarem Bolzen (33) festgehalten wird.

3. Gestell nach Anspruch 2, dadurch gekennzeichnet, daß der Bolzen aus einem Teil besteht, das ein Schwenkglied (33) bildet, das schwenkbar auf dem Deckel (4) montiert ist und mit dem Hebel (14) derart verbunden ist, daß die inaktive Stellung des Hebels dazu führt, daß das Schwenkglied (33) in ein am Gehäuse (1) befestigtes Element (42) eingreift und wobei die Betätigung des Hebels (14) das Entriegeln durch Kippen des Schwenkglieds bewirkt.

4. Gestell nach Anspruch 3, dadurch gekennzeichnet, daß das Schwenkglied (33) einen gerippten Rand (39) aufweist, dessen Rippenprofil komplementär zu dem des Elements (42) ausgebildet ist, das am Gehäuse (1) befestigt ist.

5. Gestell nach einem der Ansprüche 2—4, dadurch gekennzeichnet, daß zwischen dem Schwenkglied (33) und dem Hebel (14) eine Verbindung mit einem Stift (37) und einem Schlitz (38) vorgesehen ist.

6. Gestell nach einem der Ansprüche 1—5, dadurch gekennzeichnet, daß der Deckel (4) einen vorderen Bereich (9) aufweist, der im Verhältnis zum Gehäuse (1) übersteht, und in dem ein Griff (12) ausgebildet ist, der das Ergreifen eines Endes (13) des Hebels (14) ermöglicht, um diesen zu betätigen.

7. Gestell nach Anspruch 1, dadurch gekennzeichnet, daß die Auflagefläche des Hebels (16a) auf dem Châssis (23) sich in einer Median-Transversal-Ebene (X—X) befindet, die dem Gehäuse (1) und dem Châssis (23) gemeinsam ist.

8. Gestell nach einem der Ansprüche 1—7, dadurch gekennzeichnet, daß das Châssis (23) auf der Auflagefläche (A) mittels kugelförmigen Rollen (27), vorzugsweise aus Kunststoff, ruht.

9. Gestell nach einem der Ansprüche 6—8, dadurch gekennzeichnet, daß der Hebel einen Rahmen bildet, dessen Endquerverstrebung (13) am Griff (12) des Deckels (4) angrenzt.

10. Gestell nach einem der Ansprüche 1—9, dadurch gekennzeichnet, daß das Gehäuse Kufen (2) aufweist, die ein Gleiten des Gehäuses auf der Auflagefläche (A) über die Reibungskräfte verhindern.

11. Gestell nach einem der Ansprüche 1—10, dadurch gekennzeichnet, daß es außerdem einen Stoßdämpfer (4a) zum Dämpfen der Winkelbewegungen des Deckels bezüglich des Gehäuses aufweist.

12. Gestell nach Anspruch 11, dadurch gekennzeichnet, daß der Stoßdämpfer aus einer Blattfeder (4a) gekrümmter Form besteht, deren Enden leitend in Nuten (5a) eingeordnet sind, die am hinteren Ende des Gehäuses (1) vorgesehen sind und wobei die Spitze der Blattfeder in eine Führungsnut (6a) eingreift, die in die Platte (6) des Deckels (4) eingearbeitet ist.

**Claims**

1. Apparatus forming a base for a receiver (b) provided with a display screen, for example a computer terminal, characterised in that said apparatus comprises:

a case (1) which normally bears on a bearing surface (A) and thus supports the apparatus,

a flat cover (4) for supporting the receiver, mounted on the case (1) to pivot about a horizontal pin (3, 44) contained in a median plane (x—x) of the case, this pin connecting the case (1) to the cover (4),

a frame (23) disposed inside the case (1) and provided with rolling or sliding means (27) to permit its displacement, this frame bearing through said means on said bearing surface (A).

a lever (14) for raising together the flat cover (4) and the case (1) relative to the frame (23) which remains in contact with the bearing surface (A), while the case is raised from the bearing surface, the lever (14) being mounted on the cover (4) to pivot about a pin (19) located between its two ends and parallel to the horizontal pin (3, 44) pivotally interconnecting the cover (4) and the case (1); the lever (14) bearing by an end (16a) on the top (22) of the frame (23); the other end (13) acting as means for bringing about the raising of the cover (4) and the case (1) relative to the frame (23) so that the apparatus may be displaced by means of said rolling or sliding means (27).

2. Apparatus according to claim 1, characterised in that the cover (4) is normally retained relative to the case (1) in its relative angular position by at least one locking device (32) having a withdrawable bolt (33).

3. Apparatus according to claim 2, characterised in that the bolt is constituted by a member forming a rocker (33) pivotally mounted on the cover (4) and having with the lever (14) such connection that, in the inoperative position of the latter, the rocker (33) is engaged with an element (42) fixed to the case (1), and the actuation of the lever (44) causes an unlocking by a pivoting of the rocker.

4. Apparatus according to claim 3, characterised in that the rocker (33) comprises a toothed edge (39) to which corresponds a complementary toothed profile (41) of the element (42) fixed to the case (1).

5. Apparatus according to one of the claims 2 to 4, characterised in that a connection having a pin (37) and slot (38) is provided between the rocker (33) and the lever (14).

6. Apparatus according to one of the claims 1 to 5, characterised in that the cover (4) comprises a front part (9) which extends beyond the case (1) in which front part is formed a handle (12) enabling an end (13) of the lever (14) to be taken hold of for actuating it.

7. Apparatus according to claim 1, characterised in that the bearing of the lever (16a) on the frame (23) is located in a median transverse plane (XX) common to the case (1) and the frame (23).

8. Apparatus according to one of the claims 1 to 7, characterised in that the frame (23) bears on the bearing surface (2) through spherical rollers (27) preferably made from a plastics material.

9. Apparatus according to one of the claims 6 to 8, characterised in that the lever (14) constitutes a yoke whose transverse end portion (13) is adjacent to the handle (12) of the cover (4).

10. Apparatus according to one of the claims 1 to 9, characterised in that the case comprises non-slip shoes (2) for frictional contact of the case with the bearing surface (A).

11. Apparatus according to any one of the claims 1 to 10, characterised in that it further comprises a shock-absorber (4a) for angular displacements of the cover (4) relative to the case.

12. Apparatus according to claim 11, characterised in that said shock-absorber is constituted by a spring strip (4a) of curved shape whose ends are slidably engaged in grooves (5a) provided in the rear end of the case (1), the top of the strip being engaged in a guide groove (6a) formed in the plate (6) of the cover (4).

FIG.1

0 064 927

## FIG.2

## FIG.3

## FIG.4

0 064 927

## FIG. 5